# FASCICULE DE BREVET EUROPEEN

(11) **EP 0 407 292 B1**
(45) Date de publication et mention de la délivrance du brevet: **06.10.1993**
(21) Numéro de dépôt: 90401919.7
(22) Date de dépôt: 03.07.1990
(51) Int. Cl.: A47F 3/00, A47F 3/12, F16B 12/24

(54) **Meuble d'exposition**
Schaukasten
Display cabinet

(30) Priorité: 04.07.1989 FR 8908959
(43) Date de publication de la demande: 09.01.1991
(73) Titulaire: ETABLISSEMENTS CORONA S.A., F-95470 Fosses (FR)
(72) Inventeur: Provin, Claude Emmanuel Georges, F-95470 Vemars (FR)
(74) Mandataire: Colas, Jean-Pierre

(56) Documents cités:
- EP-A- 0 231 839
- DE-A- 1 561 616
- FR-A- 1 238 727
- FR-A- 2 409 412
- GB-A- 403 702
- GB-A- 461 094

## Description

La présente invention est relative à un meuble d'exposition et, plus particulièrement, à un tel meuble conçu pour ne pouvoir être démonté sans accès à l'intérieur du meuble.

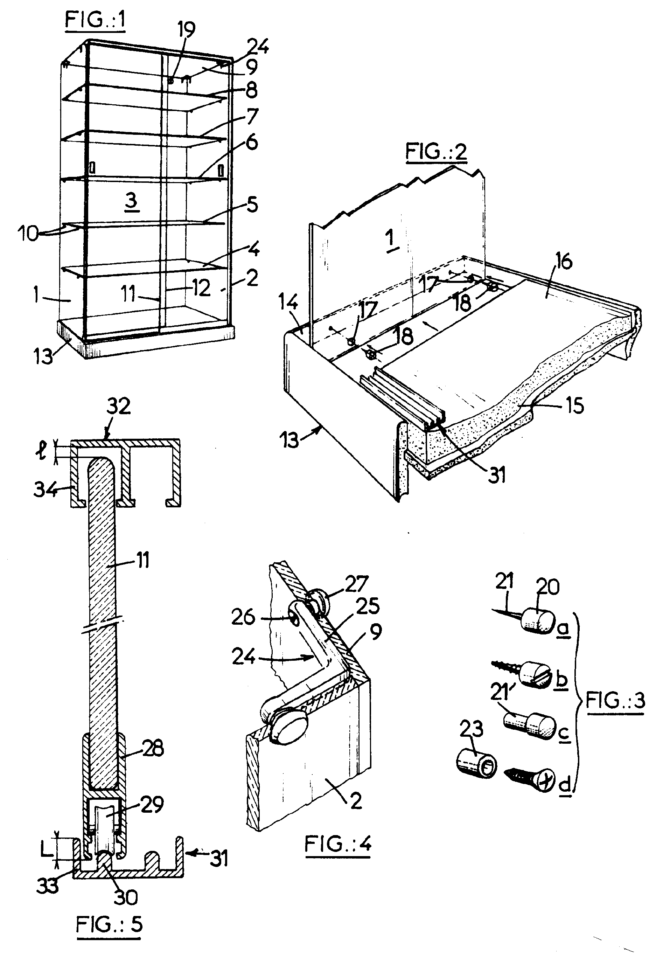

On expose couramment des objets, dans des locaux privatifs ou commerciaux, en les présentant dans des meubles vitrés et fermés qui les protègent de la poussière et/ou des vols. Comme représenté à la figure 1 du dessin annexé, un tel meuble comprend des panneaux verticaux jointifs 1, 2, 3, et des tablettes telles que 4, 5, 6, 7, 8, une tablette supérieure 9 fermant le meuble à sa partie haute. Les tablettes reposent sur des taquets tels que 10 fixés dans des trous percés dans les panneaux verticaux latéraux 1, 2 du meuble, par exemple. Des portes coulissantes 11, 12 ferment la façade du meuble. Le tout repose sur un socle 13 dans lequel sont ménagées des rainures et glissières pour recevoir respectivement les bords inférieurs des panneaux 1, 2, 3 et des portes coulissantes 11, 12. Ces dernières sont couramment constituées par des plaques de verre, de même que tout ou partie des panneaux verticaux et des tablettes, de manière à constituer une vitrine d'exposition d'objets posés sur les tablettes.

Pour interdire un accès non autorisé à ces objets, les portes coulissantes de tels meubles sont couramment munies d 'une serrure. Cette précaution s'avère bien souvent insuffisante pour protéger les objets de vols discrets (sans bris de verre) car le plus souvent les panneaux verticaux et les portes coulissantes ne sont retenus sur le socle que par leur simple poids, important il est vrai lorsque ces éléments du meuble sont constitués de plaques de verre. On constate cependant que deux personnes peuvent soulever ensemble toute la partie vitrée du meuble pour la dégager de son socle et accéder ainsi aux objets placés à l'intérieur du meuble.

Certaines vitrines du commerce sont cependant munies de moyens pour solidariser le socle et la partie vitrée. Les vitrines connues comprennent soit des moyens de fixation amovibles accessibles de l'extérieur du meuble, soit des moyens de fixation permanente tels que des cordons de produits adhésifs sur le verre.

Les moyens de fixation amovibles accessibles de l'extérieur du meuble sont inefficaces contre les voleurs qui peuvent facilement les démonter. Les moyens de fixation permanente présentent évidemment l'inconvénient de ne pas permettre un démontage, même autorisé, du meuble. Or un tel démontage peut être nécessaire lorsqu'on souhaite déménager le meuble, objet lourd et encombrant difficile à transporter d'une seule pièce.

Une vitrine selon le préambule de la revendication 1 est connue par DE-A-1 561 616.

La présente invention a pour but de réaliser un meuble du type vitrine qui ne présente aucun des inconvénients évoqués ci-dessus.

La présente invention a aussi pour but de réaliser un tel meuble qui soit démontable mais qui ne puisse être démonté que si l'on dispose d'un accès au volume intérieur au meuble.

On atteint ces buts de l'invention avec un meuble d'exposition, en particulier du type vitrine, comprenant des panneaux verticaux jointifs reposant sur un socle et une tablette supérieure horizontale délimitant avec le socle, les panneaux verticaux et des portes, un espace fermé, et au moins un organe accessible de l'intérieur du meuble seulement, pour verrouiller chaque panneau vertical. Suivant l'invention, le socle comprend un fond solidaire d'un bandeau périphérique débordant verticalement du fond, les panneaux verticaux sont appliqués à leur base contre la face interne du bandeau et l'organe de verrouillage traverse un trou percé dans un panneau au voisinage d'un bord inférieur de celui-ci pour pénétrer dans le bandeau par sa face interne.

Le meuble comprend encore un fond amovible conçu pour s'appliquer contre le fond du socle et contre les faces internes des panneaux verticaux, l'épaisseur du fond amovible étant choisie pour cacher les moyens de verrouillage des panneaux verticaux sur le socle.

Les moyens de verrouillage sont conçus pour permettre un démontage autorisé du meuble, depuis l'intérieur de celui-ci.

D'autres caractéristiques et avantages de la présente invention apparaitront à la lecture de la description qui va suivre et à l'examen du dessin annexé, donné seulement à titre d'exemple et dans lequel :
La figure 1 représente un meuble du type vitrine, de la technique antérieure.
La figure 2 est une vue perspective éclatée, avec arrachement partiel, du socle et d'un panneau vertical du meuble suivant la présente invention.
La figure 3 représente divers modes de réalisation d'organes de verrouillage utilisables dans la présente invention.
La figure 4 est une vue perspective d'un mode de réalisation d'une attache utilisée pour assembler le meuble suivant l'invention et,
La figure 5 est une vue partielle en coupe d'une porte coulissante et de glissières incorporées au meuble suivant l'invention.

On se réfère au dessin annexé pour décrire le meuble suivant l'invention qui présente extérieurement la forme générale du meuble connu de la figure 1, mais qui est modifié de manière à être rendu indémontable de l'extérieur par l'incorporation des moyens représentés aux figures 2 à 5.

En particulier la figure 2 illustre les moyens utilisés pour empêcher un démontage du socle 13 du meuble, depuis l'extérieur de ce meuble. Sur cette figure il apparait que le socle 13 est constitué par un bandeau vertical 14 fixé à la périphérie d'un fond fixe 15 de manière à déborder de la face supérieure de ce fond. Le bandeau 14 suit ainsi un contour généralement carré ou rectangulaire, conforme à la section horizontale du meuble. Les panneaux verticaux 1, 2 et 3 du meuble reposent par leur base contre le fond fixe 15, en appui contre la face interne du bandeau 14, sur la partie de ce bandeau qui déborde au-dessus du fond fixe. Sur la figure 2 apparaît seul le panneau vertical 1, mais il est clair que les panneaux 2 et 3 s'appliquent de même contre le bandeau 14. Un fond mobile 16 s'ajuste sur le fond fixe 15 après mise en place des panneaux 1, 2 et 3. Une glissière 31 est fixée sur le fond 16 parallèlement au quatrième côté du bandeau 13. Le rôle de cette glissière sera explicité plus loin, en liaison avec la description de la figure 5.

Suivant l'invention chacun des panneaux verticaux 1 et 2, en verre par exemple, est percé au voisinage de son bord inférieur en appui sur le fond 15, d'au moins un trou 17. Un organe de verrouillage 18 passe dans ce trou pour pénétrer dans le bandeau adjacent 14, l'organe bouchant, en position de verrouillage, totalement ou partiellement le trou 17 sans déboucher sur la face interne du bandeau. Après mise en place de tels organes de verrouillage dans tous les trous 17 percés au voisinage des bords inférieurs des panneaux 1 et 2, on place le fond mobile 16 sur le fond fixe, le fond mobile s'ajustant étroitement contre les panneaux verticaux verrouillés, de manière à assurer leur maintien en position verticale. Incidemment, lorsque l'organe de verrouillage 18 pénètre librement dans un logement prévu dans le bandeau 14, dans l'axe du trou 17, le bord du fond mobile 16 empêche cet organe de ressortir du trou 18 en coopérant ainsi au maintien du verrouillage du panneau vertical sur le bandeau 14, et donc sur le socle. Pour cela on donne au fond mobile une épaisseur convenable supérieure à la distance séparant le fond fixe 15 de la partie la plus écartée de l'organe de verrouillage 18. Cette disposition permet ainsi en outre de dissimuler les organes de verrouillage. Ceci est avantageux du point de vue esthétique et du point de vue sécurité, puisque la position des points d'attache du socle sur les panneaux verticaux est cachée à d'éventuels voleurs.

On remarquera que, selon l'invention, les organes de verrouillage sont inaccessibles de l'extérieur du meuble. Ainsi les portes coulissantes 11, 12 étant fermées à clé à l'aide d'une serrure 19, il n'est pas possible de détacher la partie vitrée du meuble de son socle. Par ailleurs les organes de verrouillage pouvant être choisis de manière à être amovibles ou à permettre le démontage des panneaux, il reste possible de procéder à un démontage autorisé du meuble, portes coulissantes ouvertes pour accéder à ces organes, en vue de son transport par exemple.

De très nombreux organes de verrouillage connus sont disponibles pour assurer le couplage des panneaux au socle 13. On a représenté quelques uns d'entre eux à la figure 3. A la figure 3a l'organe 18 comprend une tête cylindrique 20 de hauteur égale à l'épaisseur du panneau à verrouiller de manière à venir affleurer la surface de celui-ci pour ne pas gêner l'installation du fond mobile 16. Une pointe 21 est fixée axialement sur la tête pour être enfoncée à force dans le bandeau 14. A la figure 3b la pointe est remplacée par une vis et la tête est fendue pour permettre le vissage de l'organe dans le bandeau. A la figure 3 c l'organe 18 comprend un téton 21′ conçu pour pénétrer dans un logement borgne prévu à cet effet dans le bandeau. Dans tous ces modes de réalisation, la tête de l'organe 18 est réalisée en une matière telle qu'une matière plastique, susceptible de se déformer légèrement au contact du verre des trous des panneaux verticaux pour éviter de briser ceux-ci.

A la figure 3d, l'organe de verrouillage 18 est constitué par une simple vis 22 du commerce passant dans une bague 23 en un matériau souple. Lorsqu'on enfonce la vis dans le bandeau à travers le trou 17, la matière de la bague s'écrase contre les parois du trou en permettant la tête de s'escamoter dans le trou tout en renforçant le verrouillage du panneau du fait du blocage dû à l'écrasement de la bague 23 dans le trou.

Il faut, bien entendu, s'assurer que le meuble suivant l'invention ne puisse pas être démonté de l'extérieur en agissant sur une autre partie que le socle. Des attaches à deux (figure 4) ou trois bras orthogonaux sont utilisées classiquement pour assembler les panneaux verticaux à la tablette supérieure 9. Comme représenté à la figure 4, ces attaches 24 comprennent sur chaque bras tel que 25, une vis 26 qui traverse un trou percé dans un panneau ou la tablette 9 adjacente pour se visser dans un alésage fileté formé dans une tête 27 placée sur la face extérieure de la tablette 9. La vis est disposée à l'intérieur du meuble. La tête 27 extérieure est dépourvue de toute aspérité permettant de la faire tourner, pour résister à des tentatives de démontage par l'extérieur. Une rondelle en matière souple est introduite entre la tête 27 et la surface adjacente de la tablette 9, pour bloquer la tête sur la tablette en cas de tentative de démontage extérieur. Ainsi l'attache utilisée dans le meuble suivant l'invention apparaît-elle indémontable de l'extérieur du meuble, contrairement aux attaches couramment utilisées dans les meubles du même type.

Par ailleurs les portes coulissantes 11, 12 du meuble suivant l'invention sont montées sur des glissières qui s'opposent à leur démontage non autorisé. A la figure on a représenté les glissières qui supportent la porte 11, par exemple. La base de la porte est prise dans un profilé 28 qui définit une cage pour une série de roulettes 29 en appui sur un rail 30 incorporé à la glissière basse 31. Le bord supérieur de la porte 11 est pris dans une glissière 32 fixée sous la tablette supérieure 9. Au montage du meuble, la glissière 32, solidaire de la tablette 9, est passée sur les bords supérieurs des portes 11, 12. L'engagement L du profilé 28 derrière un rebord 33 de la glissière 31 est ajusté de manière à être supérieur au dégagement l laissé au bord supérieur de la porte 11 par rapport au fond de la gouttière supérieure 32, une fois le meuble monté. On ne peut alors dégager la porte 11 de la glissière 31 par un soulèvement classique de la porte au-dessus de cette glissière.

Le meuble suivant l'invention est ainsi protégé complètement de toute tentative de démontage par l'extérieur, non autorisé. La sûreté de la garde des objets qui y sont entreposés en est accrue, ceci grâce à des moyens simples, de mise en oeuvre particulièrement économique. Le meuble reste cependant entièrement démontable par une personne autorisée pouvant accéder à l'intérieur du meuble.

On remarquera que, les panneaux latéraux 1 et 2 étant verrouillés sur le socle 13, il n'est pas nécessaire de procéder au même verrouillage du panneau 3. En effet celui-ci est relié à la tablette 9 et aux panneaux latéraux 1 et 2 par des attaches indémontables de l'extérieur, du même type que celle représentée à la figure 4 mais présentant trois bras orthogonaux au lieu de deux.

Bien entendu, l'invention n'est pas limitée au mode de réalisation décrit et représenté qui n'a été donné qu'à titre d'exemple. De nombreux organes de verrouillage bien connus pourraient être utilisés en lieu et place de ceux décrits. Les têtes de ces organes pourraient s'escamoter dans des logements prévus à cet effet dans le fond amovible, plutôt que dans les trous 18. Des portes ouvrantes pourraient être substituées aux portes coulissantes du meuble décrit ci-dessus. De même l'invention n'est pas limitée à un meuble du type vitrine et s'étend au contraire à tout meuble comportant ou non des parois transparentes, à usage de rangement ou autre, de base carrée, rectangulaire, circulaire, etc...

## Revendications

1. Meuble d'exposition comprenant des panneaux verticaux jointifs (1,2,3) reposant sur un socle (13), une tablette supérieure horizontale (9) délimitant avec le socle, les panneaux verticaux et des portes, un espace fermé, au moins un organe (18) accessible de l'intérieur du meuble seulement, pour verrouiller chaque panneau vertical, caractérisé en ce que le socle (13) comprend un fond (15) solidaire d'un bandeau périphérique (14) débordant verticalement du fond, en ce que les panneaux verticaux (1,2,3) sont appliqués à leur base contre la face interne du bandeau (14) et en ce que ledit organe de verrouillage (18) traverse un trou percé dans un panneau au voisinage d'un bord inférieur de celui-ci et pénètre dans le bandeau (14) par sa face interne.

2. Meuble conforme à la revendication 1, caractérisé en ce que l'organe de verrouillage (18) comporte une tête conçue pour s'escamoter dans le trou (17) après fixation dans le bandeau (14).

3. Meuble conforme à la revendication 2, caractérisé en ce que la tête est solidaire d'une vis ou d'une pointe qui pénètre le bandeau.

4. Meuble conforme à la revendication 2, caractérisé en ce que la tête est solidaire d'un téton (21') qui pénètre librement dans un logement borgne creusé dans le bandeau (14).

5. Meuble conforme à la revendication 1, caractérisé en ce que l'organe de verrouillage est constitué par une vis et une bague (23) en matière souple traversée par la vis pour se serrer contre les parois du trou (17) lors du vissage de la vis et pour permettre l'escamotage de celle-ci dans le trou.

6. Meuble conforme à l'une quelconque des revendications précédentes, caractérisé en ce qu'il comprend un fond amovible (16) conçu pour s'appliquer contre le fond (15) du socle (13) et contre les faces internes des panneaux verticaux, l'épaisseur du fond amovible étant choisie pour cacher les organes de verrouillage des panneaux verticaux sur le socle.

7. Meuble conforme à l'une quelconque des revendications précédentes, caractérisé en ce que les panneaux verticaux sont assemblés entre eux au moyen d'attaches démontables de l'intérieur du meuble seulement.

8. Meuble conforme à l'une quelconque des revendications précédentes, comprenant des glissières inférieure (31) et supérieure (32) pour des portes coulissantes (11,12) fermant un côté du meuble, caractérisé en ce que les glissières (31,32) sont dimensionnées de manière à s'opposer à un démontage des portes par soulèvement, depuis l'extérieur du meuble.

9. Meuble conforme à l'une quelconque des revendications précédentes, caractérisé en ce que les moyens de verrouillage (18) sont conçus pour permettre un démontage autorisé du meuble, depuis l'intérieur de celui-ci.

10. Meuble conforme à l'une quelconque des revendications précédentes, caractérisé par des parois (1,2,3,9) transparentes.

## Patentansprüche

1. Schaukasten mit vertikalen Verbindungsplatten (1,2,3), welche auf einem Sockel (13) aufliegen, einem oberen horizontalen Fachbrett (9), welches mit dem Sockel, den vertikalen Platten und Türen einen geschlossenen Raum begrenzt, mit wenigstens einer Einrichtung (18), welche nur vom Innern des Kastens zugänglich ist, um jede vertikale Platte zu verriegeln, dadurch **gekennzeichnet**, daß der Sockel (13) einen Boden (15) aufweist, welcher einstückig mit einer Umfangsleiste (14) ausgebildet ist, welche höher als der Boden vertikal erstreckt, daß die vertikalen Platten(1,2,3)an ihren Basisteilen gegen die Innenfläche der Leiste (14) zur Anlage bringbar sind, und daß die Verriegelungseinrichtung (18) durch eine Öffnung geht, welche eine Platte in der Nähe eines unteren Randes derselben durchsetzt und in die Leiste (14) durch die Innenfläche geht.

2. Schaukasten nach Anspruch 1, dadurch gekennzeichnet, daß die Verriegelungseinrichtung (18) einen Kopf aufweist, welcher versenkt in der Öffnung (17) nach dem Befestigen der Leiste (14) aufgenommen ist.

3. Schaukasten nach Anspruch 2, dadurch gekennzeichnet, daß der Kopf einteilig mit einer Schraube oder einer Spitze ausgelegt ist, welche in die Leiste eindringt.

4. Schaukasten nach Anspruch 2, dadurch gekennzeichnet, daß der Kopf einteilig mit einem Zentrieransatz (21') ausgelegt ist, welcher frei in einen hohl nicht durchgehend Sitz in der Leiste (14) durchdringt.

5. Schaukasten nach Anspruch 1, dadurch gekennzeichnet, daß die Verriegelungseinrichtung von einer Schraube und einer Unterlagsscheibe (23) aus weichem Material gebildet wird, durch welche die Schraube geht, und diese gegen die Wand der Öffnung (17) beim Anziehen der Schraube druckt und um ein Einziehen derselben in die Öffnung zu ermöglichen.

6. Schaukasten nach einem der vorangehenden Ansprüche, dadurch gekennzeichnet, daß er einen abnehmbaren Boden (16) aufweist, welcher zur Anlage gegen den Boden (15) des Sockels (13) und gegen die inneren Flächen der vertikalen Platten kommt, und die Dicke des abnehmbaren Bodens derart gewählt ist, daß die Verriegelungseinrichtung der vertikalen Platten am Sockel verdeckt sind.

7. Schaukasten nach einem der vorangehenden Ansprüche, dadurch gekennzeichnet, daß die vertikalen Platten untereinander mit Hilfe von Beschlägen zusammengesetzt sind, die nur vom Innern des Kastens her zerligbar sind.

8. Schaukasten nach einem der vorangehenden Ansprüche, welcher untere Gleitführungen (31) und obere Gleitführungen (32) für Schiebetüren (11,12) aufweist, welche eine Seite des Kastens verschließen, dadurch gekennzeichnet, daß die Gleitführungen (31,32) derart dimensioniert sind, daß ein Ausbau der Türen von der Außenseite des Kastens her durch Anheben verhindert wird.

9. Schaukasten nach einem der vorangehenden Ansprüche, dadurch gekennzeichnet, daß die Verriegelungseinrichtungen (18) derart angeordnet sind, daß eine befugte Demontage des Kastens vom Innern desselben her gestattet wird.

10. Schaukasten nach einem der vorangehenden Ansprüche, dadurch gekennzeichnet, daß die Wände (1,2,3,9) transparent sind.

## Claims

1. Display unit having contiguous vertical panels (1, 2, 3) resting on a base (13), a horizontal top shelf (9) defining, with the base, vertical panels and doors, a closed space, at least one device (18) accessible only from inside the unit, for locking each vertical panel, characterised in that the base (13) comprises a bottom (15) attached to a peripheral fascia (14) protruding vertically from the bottom, in that the vertical panels (1, 2, 3) are applied at their base against the internal face of the fascia (14), and in that the said locking device (18) passes through a hole drilled in a panel close to a lower edge of the latter and enters the fascia (14) through its internal face.

2. Unit according to Claim 1, characterised in that the locking device (18) has a head designed to be concealed in the hole (17) after it has been fixed to the fascia (14).

3. Unit according to Claim 2, characterised in that the head is integral with a screw or tip which enters the fascia.

4. Unit according to Claim 2, characterised in that the head is integral with a stud (21') which freely enters a blind recess made in the fascia (14).

5. Unit according to Claim 1, characterised in that the locking device consists of a screw and a collar (23) made of flexible material, through which the screw passes so as to be gripped against the walls of the hole (17) when the screw is tightened, and to enable the latter to be concealed in the hole.

6. Unit according to any one of the preceding claims, characterised in that it comprises a removable bottom (16), designed to be applied against the bottom (15) of the base (13) and against the internal faces of the vertical panels, the thickness of the removable bottom being selected so as to conceal the devices for locking the vertical panels on the base.

7. Unit according to any one of the preceding claims, characterised in that the vertical panels are connected to one another by means of attachments which can be removed only from the inside of the unit.

8. Unit according to any one of the preceding claims, comprising lower (31) and upper (32) runners for sliding doors (11, 12) closing off one side of the unit, characterised in that the runners (31, 32) are dimensioned so as to prevent the doors being removed by being raised from outside the unit.

9. Unit according to any one of the preceding claims, characterised in that the locking means (18) are designed so as to allow authorised dismantling of the unit from inside it.

10. Unit according to any one of the preceding claims, characterised by transparent walls (1, 2, 3, 9).
